# EUROPEAN PATENT APPLICATION

(11) **EP 1 367 682 A1**
(43) Date of publication of application: **03.12.2003**
(21) Application number: 02425356.9
(22) Date of filing: 31.05.2002
(51) Int. Cl.: H02G 1/14, H02G 15/18, B25B 27/28

(54) **Protection/insulation kit for eletrical equipment and mounting device**

(71) Applicant: Pirrera, Carolina, 94017 Regalbuto (Enna) (IT)
(72) Inventor: Pirrera, Carolina, 94017 Regalbuto (Enna) (IT)
(74) Representative: Siniscalco, Fabio

(57) **Abstract**

A device (16) for mounting a tubular element (7) to sheathe at least a portion of an electric cable (8) connected to a terminal lug (6), said element being made of insulating and elastic material, said device comprising:
- a first (17) and a second (18) principal arm provided with respective active ends (32,33; 34,35);
- mechanical means (24,23,26) for coupling said principal arms in such a manner as to permit them to be pivoted with respect to each other, thus enabling the mounting device (16) to assume an insertion position in which the active ends are in contact with each other and an enlargement position in which the active ends are separated from each other and enlarge a portion of the sheathing element (7).

## Description

The present invention concerns protection/insulation kits for medium- and low voltage insulators employed with equipment of electricity distribution systems.

The equipment employed in an electricity distribution network, a case in point being the transformers of a medium-tension network that convert from medium to low voltages (MV/LV), is often installed in places that do not adequately protect the equipment against the action of atmospheric agents and contact with foreign bodies.

In particular, it should be noted that the MV/LV transformers are often situated in so-called pole stations, i.e. they are installed on poles or pylons of the distribution network and are therefore exposed to the action of atmospheric agents, pollutants and/or contact with foreign bodies (animals, for example, especially birds) that will cause undesired electric discharges or arcs. These electric discharges can be of such intensity as to cause damage to the equipment sufficiently severe to interrupt the electricity distribution.

As regards the MV/LV transformers, in particular, it has been noted that the insulators of the feedthrough type that connect the primary or secondary windings of the transformers with the respective low or medium tension lines of the distribution system are particularly liable to suffer damage due to the aforementioned causes.

There thus arises the need for making available techniques and components of protection and/or electrical insulation (hereinafter more briefly referred to as protection/insulation) of the equipment or parts thereof that will reduce the coming into being of the aforementioned damage causes. It is however essential that these components should be capable of being applied to (mounted on) the parts to be protected/insulated by means of method that are both efficient and cheap, this especially in view of the fact that these operations have often to be performed on site rather than in a specialized workshop.

The present invention sets out to provide components of protection/insulation that will make it possible to reduce the causes of damage associated with conventional electric equipment of a distribution network and a device that will permit at least one of the components to be mounted with sufficient ease and efficiency.

The aim of the present invention is attained by a device for mounting an element covering at least a portion of an electric cable and a kit for the protection/insulation of electrical equipment as described in the claims attached hereto.

Further characteristics and advantages of the present invention will be brought out more clearly by the description about to be given of some preferred embodiments thereof, which are to be considered as examples and not limitative in any way, said description making reference to the attached drawings of which:
Figure 1 shows a schematic side elevation of a medium-voltage insulator connected to the terminal lug of a cable;
Figure 2 shows a particular example of a protection /insulation kit in accordance with the present invention;
Figures 3a, 3b and 3c show perspective views of various embodiments of a mounting device in accordance with the invention;
Figures 4-6 illustrate the installation by means of one of the said devices of an insulating sheath on an electric cable connected to the insulator of Figure 1;
Figures 7a and 7b illustrate various phases of the mounting of a protective hood on said insulator;
Figure 8 shows a protection/insulation kit in accordance with the invention, inclusive of an elastic sleeve, applied to a medium-voltage insulator;
Figure 9 shows a protection/insulation kit in accordance with the invention, inclusive of an elastic sleeve, applied to a low-voltage insulator.

Various embodiments of the kit for the protection /insulation of electrical low- and/or medium voltage (LV and/or MV) equipment (not shown) will now be described with the help of the aforesaid drawings. In all these drawings identical or equivalent parts are always identified by the same reference number.

The kit in accordance with the invention can be advantageously applied to electrical equipment installed in pole or pylon stations of a common network for the distribution of electricity of, for example, the three-phase type. In particular, this equipment may comprise transformers converting from medium to low voltages (MV/LV) installed on poles or pylons and appropriately connected to electric cables connected to the network. For example, these transformers may be 60, 100 or 160 kVA MV/LV transformers.

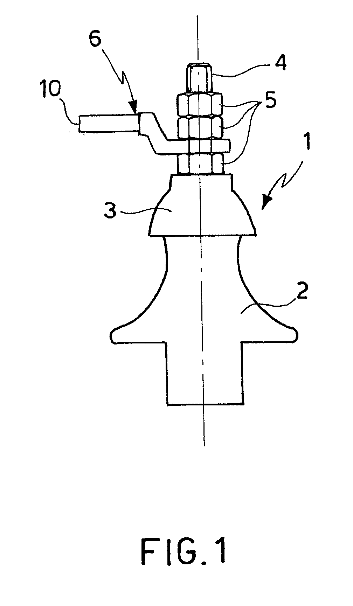

Equipment of this type is connected by means of respective terminals to at least one insulator (or, using an equivalent term, a rigid insulator), preferably of the passing type. An insulator of the type employed for medium voltages is shown in Figure 1 and indicated there by the reference number 1. As is well known to persons skilled in the art, an insulator 1 comprises a finned body 2 made of dielectric material, an upper end 3 in the form of an undercut cap, and a conductor passing within the body 2 and projecting above it, so that its free end constitutes an electric terminal 4. In the particular example here illustrated the electric terminal 4 assumes the form of a threaded metal rod (in other words: a screw) on which there can be mounted the nuts 5 needed for fixing the terminal lug 6 that connects the insulator to an external electric cable (not shown in Figure 1).

For the purposes of the present invention the term 'electric cable' is to be understood as referring both to a bare electric conductor (consisting of, for example, one or more metal wires) and to a pre-insulated electric conductor, i.e. the combination of a bare electric conductor and an insulating sheath that surrounds it.

As will be obvious to a person skilled in the art, it should be noted that the number of components included in the kit can vary (as compared with the xone here illustrated by way of example) according to the particular electrical equipment with which the kit is to be employed, especially according to the number of insulators employed therein.

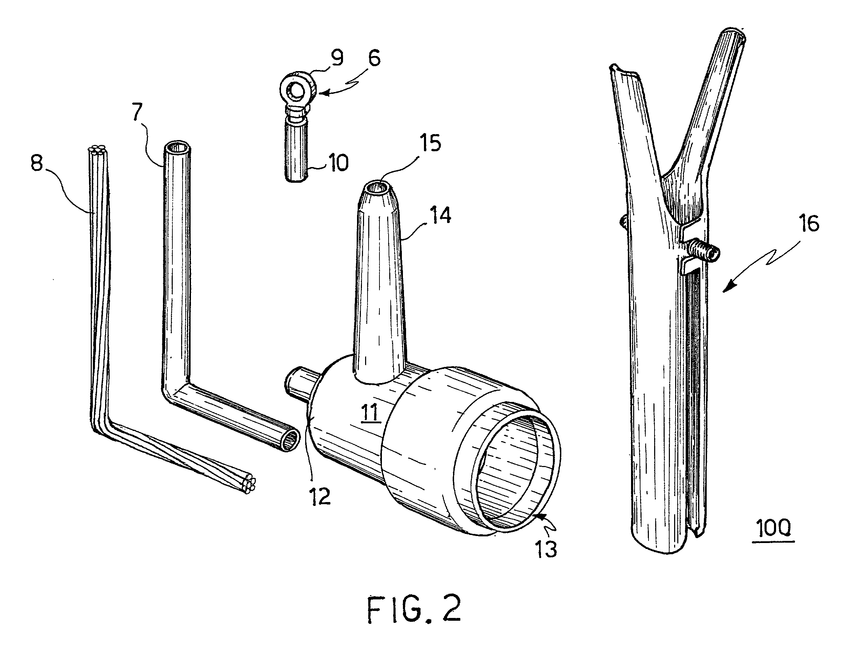

Figure 2 shows a first example of a kit 100 in accordance with the invention comprising a tubular element 7 covering at least a part of an electric cable 8 advantageously included in the kit. According to this first embodiment of the kit 100, the covering tubular element 7 consists of a waterproof sheath made of some material that is both elastic and electrically insulating, silicone for example, and intended to coating the electric cable 8 for a goodly part of its length. The cable 8 is a bare electric conductor made of, for example, copper or aluminium and consisting of entwined (twisted) wires.

Advantageously, the sheath 7 will have an internal diameter greater (by a minimal amount) than the external diameter of the electric conductor 8. For example, the conductor 8 could have a diameter of 7.5 mm, in which case the sheath 7 will have an internal diameter that will exceed this figure by a few hundredths of a millimetre. Furthermore, the sheath 7 will have a thickness of, for example 2 mm.

The kit in accordance with the invention also comprises the terminal lug 6 intended to be attached to the conductor 8 and the terminal 4 of the insulator 1. The terminal lug 6, preferably made of copper or aluminium, consists of a perforated platelet 9 integral with a joint 10 that - in the example here described - assumes the form of a substantially tubular element.

The kit 100 also comprises a waterproof protective hood 11 made of electrically insulating material and intended to be fitted to the insulator by means of a watertight joint and thus to protect the electric terminal 4 of the insulator. The protective hood 11 thus makes it possible to insulate/protect the insulator 1 in such a way as to reduce the occurrence of electric discharges or arcs that could damage it.

In particular, the protective hood 11 reduces the occurrence of electric discharges deriving from any kind of undesired materials coming into contact with the insulator, especially water, bodies of dead animals (birds or rats, for example) or accumulations of dirt.

The protective hood 11 is preferable made of silicone, rubber or caoutchouc and can be obtained by means of conventional moulding techniques. Preferably, this hood will be made of silicone rubber in such a way as to have optimal properties as far as elasticity and adhesion are concerned.

The protective hood 11 consists of a substantially bell-shaped principal body 12 with a bottom opening or mouth 13 and a tubular appendix 14 integral with the principal body 12 and communicating with its interior by means of an internal hole. At the end opposite to the one at which it is attached to the principal body 12, the tubular appendix 14 is provided with an opening 15. Advantageously, the mouth 13 and the opening 15 are each provided with an elastic edge. With a view to improving the adhesion of the mouth 13 and the opening 15 to the surfaces around which they are to be fitted, at least the insides of their respective elastic edges should be particularly smooth, i.e. substantially free of roughness.

Advantageously, moreover, the kit is equipped with a device 16 for mounting the sheath 7. As will become more apparent further on, the mounting device 16 makes it possible to enlarge and grip the sheath that is to enclose the electric conductor 8 in such a way as to permit the sheath being superposed on a portion of the terminal lug 6 and, after being released, to close around that portion to form a watertight joint.

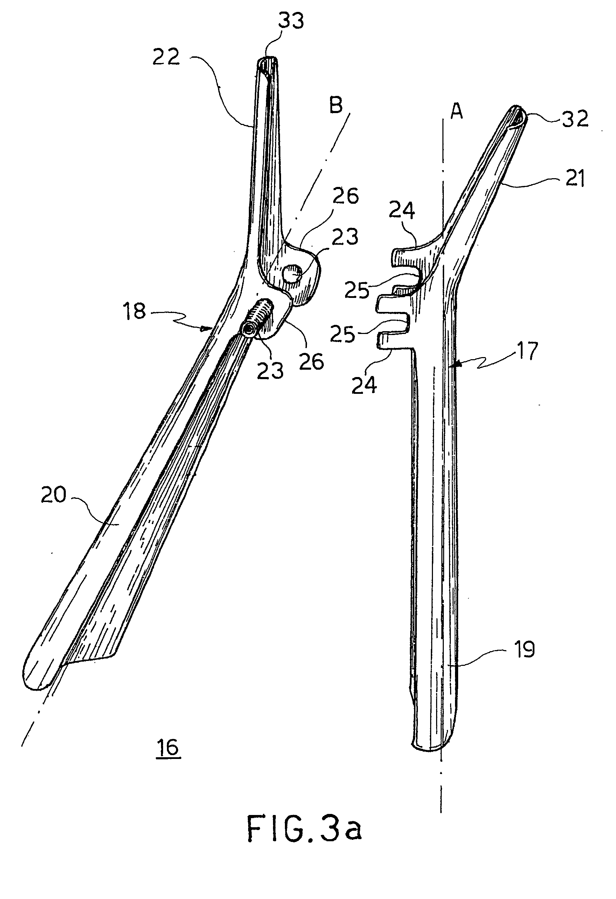

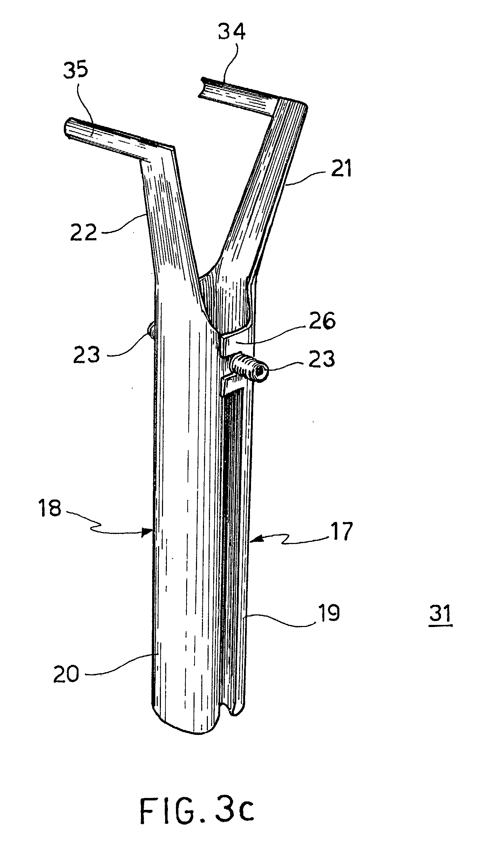

Figure 3a shows an exploded perspective view of a preferred embodiment of the mounting device 16. This device 16 consists of a first principal arm 17 and a second principal arm 18 and means for mechanically coupling these arms in such a way as to permit their being pivoted with respect to each other.

The first 17 and the second 18 arm comprise respective handles 19 and 20 by means of which the device may be held by the user, each integral with corresponding jaws 21 and 22 provided, respectively, with active ends 32 and 33.

In the example illustrated by Figure 3a the jaws 21 and 22 are substantially rectilinear and inclined with respect to the longitudinal axes A and B of their respective handles 19 and 20.

In a preferred embodiment the mechanical coupling means consist of two forks 24 symmetrically arranged on opposite edges parallel to the longitudinal axis A of the first arm 17 and in proximity of the region where the jaw 21 is joined to the handle 19. Each of the forks 24 defines a trough 25.

Furthermore, said mechanical coupling means comprise two tabs 26 integral with and projecting from opposite edges parallel to the longitudinal axis B of the second arm 18, each of which carries a respective hinge pin 23. According to the illustrated example, the hinge pins 23 extend at right angles to the longitudinal axis B of the handle 18 and in opposite directions.

In the assembled configuration of the device 16 each of the hinge pins 23 is accommodated in the trough 25 of one of the forks 24 and this in such a way as to realize a hinge that permits the arms 17 and 18 to be pivoted with respect to each other between an insertion position and an enlargement position.

It should be noted that the coupling realized by the forks 14 and the hinge pins 23 is preferably of the reversible type, i.e. such that the two principal arms 17 and 18 can be both assembled and dismantled by the user. In particular, in the insertion position the two jaws 21 and 22, together with their active ends 32 and 33, will be in contact with each other, while the handles 19 and 29 will be open and their ends removed from each other. In the enlargement position, on the other hand, the handles 19 and 20 will be in contact with each other, while the active ends 32 and 33 of the jaws 21 and 22 will be open and removed from each other.

The shape and the size of the tabs 26 and the forks 24 are such as to permit the device 16 to be fitted over the electric conductor 8 and the terminal lug attached to it in such a way as to make the terminal lug lie between the principal arms 17 and 18. In other words, the electric conductor 8 and the joint 10 of the terminal lug 6 can be made to rest inside the structure defined by the two principal arms 17 and 18 mechanically coupled by means of the forks 24 and the hinge pins 23.

According to a preferred embodiment of the device, the two handles 19 and 20 and the two jaws 21 and 22 are made of sheet metal and shaped in such a way that in the two positions described above (i.e. insertion position and enlarged position) or in intermediate positions they will define a substantially tubular structure within which at least a tract of the electric conductor 8 and/or the terminal lug 6 can be accommodated.

The mounting device 16 (made of plastic or metallic materials, for example) may also be of the disposable type.

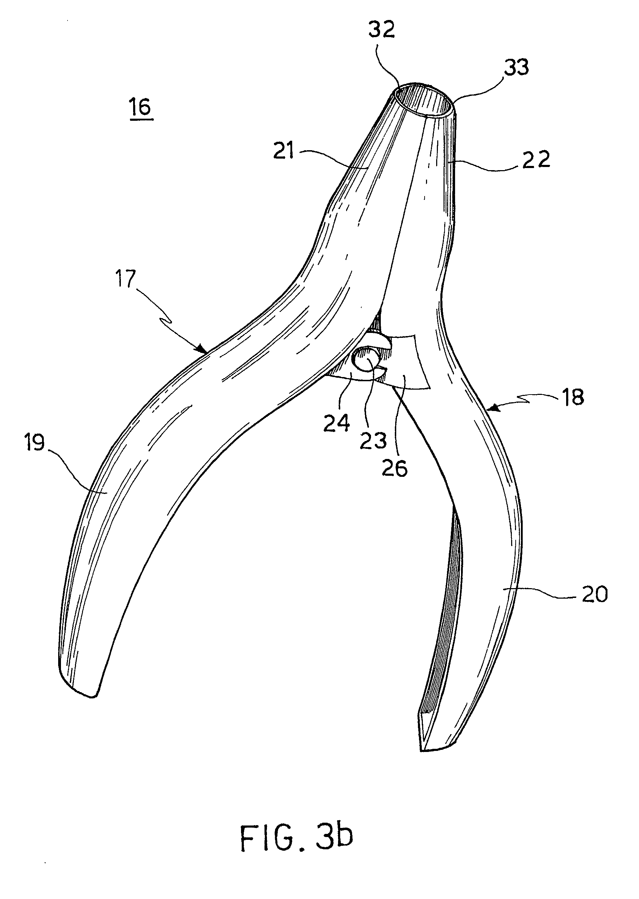

Figure 3b shows another embodiment of the device 16 similar to the previous one, but where the handles 19 and 20 are curved and the tubular structure defined in the insertion position by the jaws 21 and 22 tapers towards the active ends 32 and 33.

Figure 3c shows yet another embodiment of the mounting device in accordance with the invention, indicated by the reference number 31, in which the active ends of the jaws 21 and 22 assume the form of appendices 34 and 35 that extend in a transverse direction from said jaws of the device (for example, the appendices may be at right angles to the arms). These appendices 34 and 35 or, more precisely, their ends may be inserted into the sheath 7 in order to enlarge and grip it without either the electric conductor 8 or the terminal lug 6 being interposed between the principal arms 17 and 18 of the device. It should be noted that the embodiments described with reference to Figures 3a and 3b are preferred, because they make it possible for the sheath 7 to be arranged around a part of the terminal lug 6 with only a small effort made by the user, since in either case the hand and/or arm of the user will be substantially aligned in the direction in which the force has to be applied.

Application of the kit 100 is commenced by fitting the sheath 7 onto the conductor 8. The conductor 8 can be inserted in the sheath 7, which can be made to slide along the conductor with relative ease thanks to the fact of having an internal diameter slightly greater than the diameter of the conductor.

In particular, this operation can be performed with the parts completely dry, i.e. without the use of such lubricating substances as Vaseline. The use of a sheath as described hereinabove, as also the fact that it can be fitted without lubricants, is particularly advantageous, because it not only facilitates the operation, but also makes it more improbable that particles of undesired substances (such as water, dust, etc.) will penetrate between the sheath and the conductor. Such substances, on the other hand, have been found when using conventional methods that avail themselves of Vaseline distributed on the conductor to facilitate its insertion in a sheath having a diameter that interferes with the diameter of the conductor.

This penetration of undesired materials encountered in the known technique could be due to the fact that the thickness of the Vaseline layer causes an unsatisfactory adhesion of the sheath to the conductor. Furthermore, the infiltrations are facilitated by the helicoidal configuration of the intertwined wires that make up the conductor.

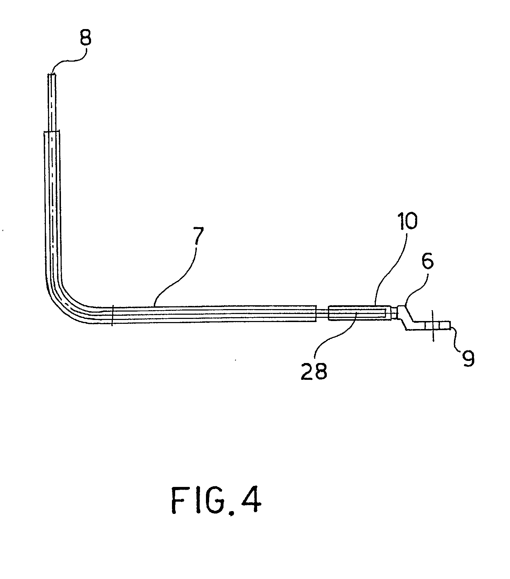

Referring now to Figure 4, the sheath is fitted in such a way as to leave free (i.e. uncovered by the sheath 7) a portion 28 of the conductor 8 situated at one end of the conductor.

Subsequently, this free portion is inserted in the tubular joint 10 to be fixed to the terminal lug 6. The fixing to the terminal lug 6 is effected by means of a punching operation effected by applying pressure with a conventional pair of pliers (not shown in the figure). The pressure applied with the pliers deforms the tubular metal joint 10 in such a way as to grip the portion 28 of the conductor inserted in it.

It should be noted that the electric conductor 8 could be fixed to the joint 10 in a similar manner also before it is inserted in the sheath 7.

One end of the sheath 7 is then enlarged and superposed on a portion of the terminal lug 6 and, more particularly, a portion of the joint 10, so that the sheath will elastically close onto the joint and adhere to it in a watertight manner.

Advantageously, the watertight fit of the sheath 7 on the terminal lug 6 can be assured by making the internal diameter of the sheath appropriately smaller than the size of the affected portion of the joint 1, in which case the sheath will interfere with the terminal lug 6.

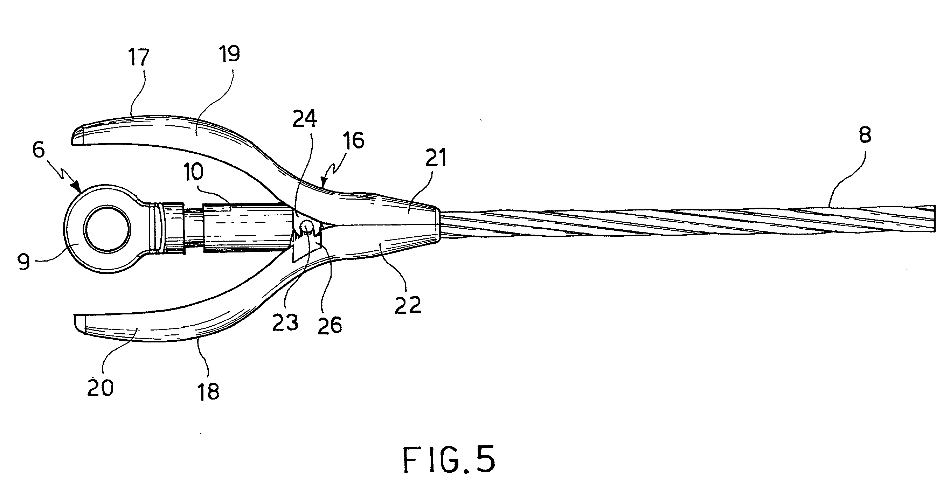

The mounting device 16 will preferably be used for enlarging the end of the sheath 7 and superposing it on the joint 10. In greater detail, as can be seen from Figure 5, the two principal arms 17 and 18 of the device 16 (similar to the one shown in Figure 3b) are assembled in such a way that the electric conductor 8 attached to the terminal lug 6 will be comprised between these two arms. The mounting device is then brought into its insertion position. In this position the electric conductor 8 and/or the terminal lug 6 come to be situated in the substantially tubular region defined by the principal arms 17 and 18.

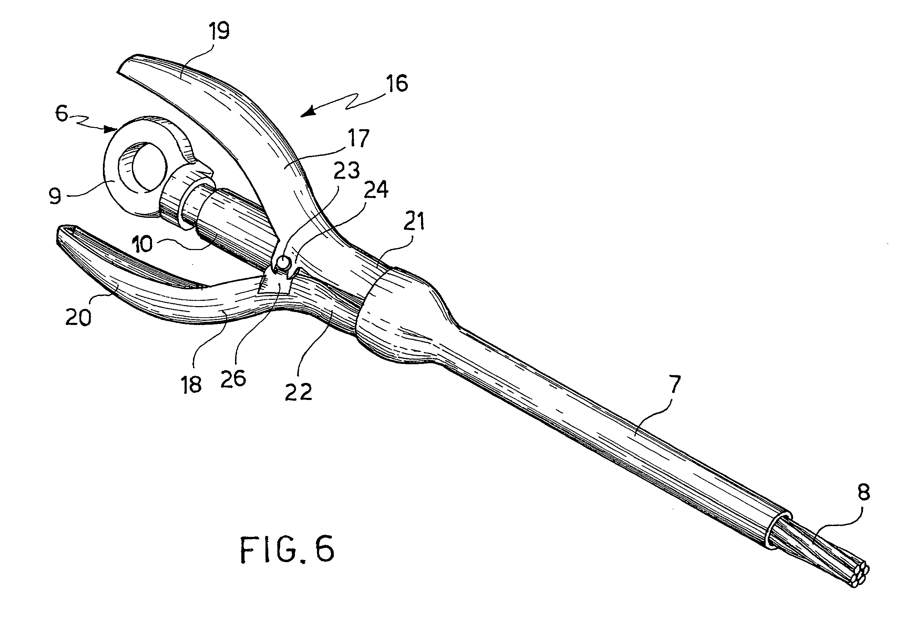

The jaws 21 and 22 or, more precisely, their active ends 32 and 33 are then inserted into the opening of the sheath 7 that faces the terminal lug 6, after which the mounting device 16 is brought into the enlargement position, thereby enlarging the diameter of the affected end portion of the sheath (see Figure 6). In this position the jaws 21 and 22 interfere with the diameter of the sheath 7 and therefore assure its being gripped by the device.

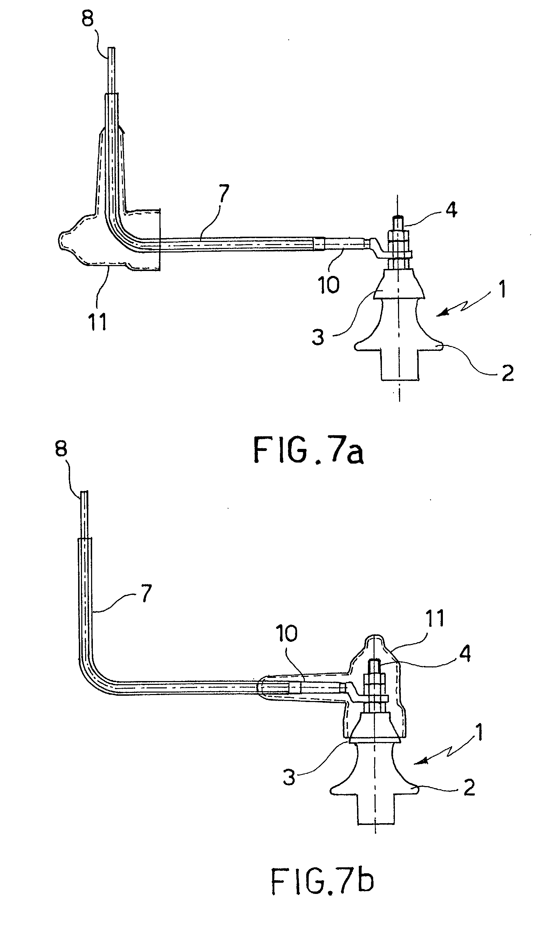

At this point the user pushes the terminal lug towards the sheath 7, which will therefore slide along the conductor until a region of the joint 10 will come to be situated within the sheath. Having reached the desired position, the mounting device 16 is brought back into the insertion position and extracted from the sheath 7, which will therefore close in a watertight manner onto the joint 10 (see Figure 7a). In this way the sheath 7 will extend from the electric conductor 8 to the joint 10, thus enclosing and protecting where the conductor is joined to the terminal lug. For example, considering a joint 10 having a length of the order of 4-5 cm, the sheath 7 will cover it for a distance of about 1 cm.

It should be noted that the force that the user has to exert to superpose the sheath 7 onto the terminal lug 6 is quite considerable and the operation would undoubtedly be very difficult, if not altogether impossible, without the mounting device 16.

Advantageously, the method of the invention also envisages the fitting of the protective hood 11.

As shown by Figure 7a, the conductor 9 enclosed in the sheath 7 is first inserted in the protective hood 11 through the mouth 13 of the hood and the opening 15 of its tubular appendix 14. Referring now to Figure 7b, the hood 11 is then slid over the terminal 4 in such a way that the elastic edge of its mouth 13 and that of the opening 15 will form watertight joints with, respectively, the cap 3 of the insulator and the sheath 7.

In this way the terminal 4, the terminal lug 6 and the terminal part of the conductor 8 will come to be situated within a waterproof chamber defined by the hood 11 and will therefore be protected against infiltration of undesired particles and insulated against direct contact with foreign bodies.

It should be noted that the fact that the sheath 7 also covers a part of the terminal lug 6 is extremely advantageous, because it limits the entry of undesired particles in a particularly efficient manner and, more particularly, their accumulating in the regions between the conductor 8 and the terminal lug connected to it. The sheath 7 slipped over the terminal lug 6 thus performs a considerable protective action that could not be attained by the sole fitting of the protective hood 11.

It should also be noted that the mounting device 16 is very advantageous, because it enables the operator to fit the sheath quickly and easily in the described position.

The use of an elastic sheath 7 in combination with the mounting device 16 makes it possible, for example, to avoid having to enclose the electric conductor in a sheath of the heat-shrinking type. In fact, the heat-shrinking sheaths suggested by conventional techniques are associated with the drawback that, after they have been slipped over the conductor and shrunk onto it by the application of heat, they will not necessarily adhere perfectly to the conductor, but may assume an uneven shape that will facilitate the infiltration of particles and therefore the drawing of electric arcs.

The various components of the kit in accordance with the invention, i.e. the sheaths, the protective hoods or the insulating sleeves (which will be described further on), can be advantageously produced in such a way as to have an adequate dielectric rigidity (for example, greater than 15 kV/mm) and values of the surface resistivity, decay of the percentage elongation at failure, mechanical strength and resistance to aging cycles on keeping with their function.

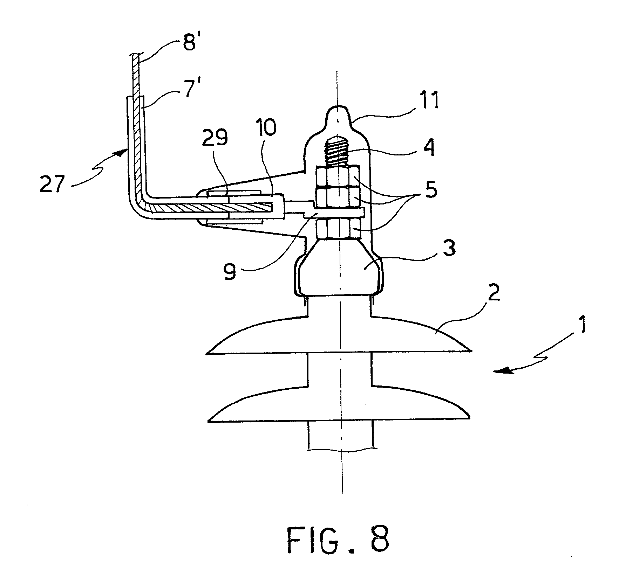

Figure 8 shows a second embodiment of the present invention. In the case illustrated by Figure 8 the kit comprises, over and above the previously mentioned components and as an alternative to the bare electric conductor 8, an electric cable 27 of the pre-insulated type consisting of an electric conductor 8' and an insulating external sheath 7'.

The pre-insulated electric cable 27 may be of the type normally employed in electricity networks, in which the electric conductor 8' consist of several intertwined filiform and conductive elements and the sheath 7' is made of butyl rubber and is applied to the conductor during the production phase.

According to this embodiment, the tubular enclosing element assumes the form of a sleeve 29 (in addition to the sheath 7') made of insulating, impermeable and elastic material and arranged in such a manner as to close in a watertight manner onto the regions where the cable 27 is attached to the joint 10. In this case the sleeve 29 will extend between a terminal section of the sheath 7' and the joint 10, closing onto them in a watertight manner. Advantageously, the sleeve 29 will be made of silicone.

The previously described mounting device 16 can be conveniently used for fitting the elastic sleeve 29, the manner in which this is done being altogether similar to the procedure already described with the help of Figures 5, 6, 7a and 7b. Unlike the fitting of the sheath 7 onto the electric conductor 8, however, the sleeve 29 may be mounted by dragging it into position by means of the mounting device 16.

It should be noted that the kit in accordance with the invention can be advantageously applied not only to medium-voltage insulators but also to their low-voltage counterparts. In the case of an MV/LV transformer, in fact, a short circuit in the secondary winding connected to the low-voltage insulator could cause permanent damage to the structure of the windings and the interruption of the line feeding the substation.

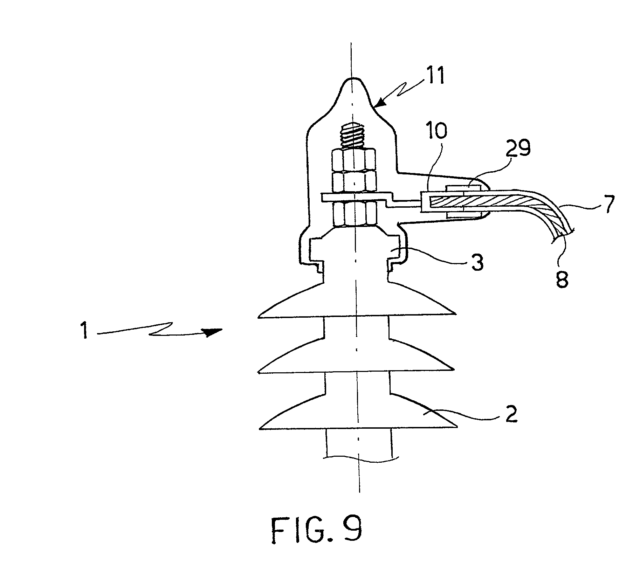

In this connection (and for completeness of description) Figure 9 shows a particular kit in accordance with the invention fitted to a low-voltage insulator 1. The kit of Figure 9 employs an elastic sleeve 29 (preferably made of silicone) similar to the one shown in Figure 8 and capable of being fitted with the mounting device 16. In Figure 8 the terminal lug 6 is mounted upside down as compared with the manner in which it is connected to medium-voltage insulators.

The kit in accordance with the invention makes it possible to realize an efficient protection and insulation of electrical equipment to which it is fitted, thus lengthening its useful life and avoiding interruptions of the electricity supply. Furthermore, the use of the mounting device makes it possible to obtain the desired protection/insulation quickly and with little or no trouble for the operator.

Obviously, when a person skilled in the art finds himself faced with contingent and specific problems, he will be able to introduce numerous modifications and variants into the mounting device and insulation kit in accordance with the present invention, though without thereby going beyond the protection limits of the invention as defined in the claims attached hereto.

## Claims

1. A device (16;31) for mounting a tubular element (7,29,30) for covering at least a portion of an electric cable (8,27) connected to a terminal lug (6), said element being made of insulating and elastic material, said device comprising:
- a first (17) and a second (18) principal arm provided with respective active ends (32,33; 34,35);
- mechanical means (24,23,26) for coupling said principal arms in such a manner as to permit them to be pivoted with respect to each other, thus enabling the mounting device (16) to assume an insertion position in which the active ends (32,33) are brought closer each other to be inserted into an opening of the covering element applied to said cable and an enlargement position in which the active ends are separated from each other in such a way to enlarge a portion of the covering element (7), the active ends gripping the covering element (7,29,30) in the enlargement position to permit its being superposed on a region of the terminal lug (6) onto which said element closes in a watertight manner.

2. A device (16;31) in accordance with Claim 1, wherein said principal arms (17,18) comprise respective handles (19,20) for holding the device (16) and respective jaws (21,22) that are integral with the handles and are provided with active ends (32,33;34,35).

3. A device (16;31) in accordance with Claim 2, wherein said jaws (21,22) are inclined with respect to the longitudinal axes of the respective handles (19,20)

4. A device (16;31) in accordance with Claim 1, wherein said active ends (32,33;34,35) constitute a tapering structure in the insertion position.

5. A device (16;31) in accordance with Claim 1, wherein said coupling means (24,23,26) permit the device (16) to be fitted onto the electric cable (8,27) connected to the terminal lug (6) in such a manner that said terminal lug will come to be interposed between said principal arms (17,18).

6. A device (16;31) in accordance with Claim 1, wherein said coupling means (24,23,26) are reversible to permit the device being assembled and dismantled.

7. A device (16;31) in accordance with Claim 2, wherein the active ends consist of a first (34) and a second (35) appendix, each of the appendices being attached to one of said jaws and extending in a transverse direction with respect to said jaw.

8. A device (16;31) in accordance with Claim 1, wherein said coupling means (24,23,26) comprise at least one hinge pin (23) and a fork (24) capable of pivoting on the hinge pin.

9. A device (16;31) in accordance with Claim 1, wherein said arms (17,18) are shaped in such a way as to delimit a substantially tubular structure within which at least a tract of the electric conductor 8 and/or the terminal lug 6 can be accommodated.

10. A kit (100) for the protection/insulation of the electric equipment of an electricity distribution network, said equipment including a medium- or low voltage insulator (1) provided with a terminal (4) intended to be connected to an electric cable (8,27) by means of a terminal lug (6), said kit comprising at least one tubular element (7,29,30) for covering at least a portion of the electric cable (8,27) and made of insulating and elastic material, the kit being **characterized in that** it comprises a mounting device (16;31) for enlarging one end of the covering element and superposing on a region of the terminal lug (6) said end of the covering element closes in a watertight manner, the mounting device (16;31) being realized in accordance with at least one of the preceding claims.

11. A kit (100) in accordance with Claim 10, wherein said covering element (8) has an internal diameter such as to interfere with the size of the terminal lug.

12. A kit (100) in accordance with Claim 10, wherein said electric cable is a bare metallic conductor (8) and the covering element is an elastic protection sheath (7) of said electric conductor.

13. A kit (100) in accordance with Claim 12 wherein said elastic sheath (7) has an internal diameter greater than the external diameter of the bare metallic conductor (8) in such a way to allow a dry covering of the conductor.

14. A kit (100) in accordance with Claim 10, wherein said electric cable (27) comprises an electric conductor (8') enclosed in an external sheath (7') and wherein said covering element is an additional sleeve (29;30) that extends from a terminal region of the external sheath to said portion of the terminal lug (6).

15. A kit (100) in accordance with Claim 10, wherein said covering element is made of silicone.

16. A kit (100) in accordance with Claim 13, wherein the external sheath (7') is made of butyl rubber.

17. A kit (100) in accordance with Claim 10, wherein said terminal lug (6) is provided with a first end (9) that can be connected to the terminal (4) of the insulator (1) and a second end in the form of a substantially tubular metallic joint (10) into which a part of the electric cable can be inserted.

18. A kit (100) in accordance with Claim 10 that also comprises a protective hood (11) made of insulating material and intended to be fitted in a watertight manner on one end (3) of the insulator (1), so that it will define an internal region housing said terminal (4) and the terminal lug (6) connected to the electric cable (8,27) and at least partially covered by the covering element (7,29,30), the protective hood being provided with a through hole that permits the electric cable to pass to the outside.

19. A kit (100) in accordance with Claim 10, wherein said electric equipment is a transformer converting medium voltages into low voltages.

20. A kit (100) in accordance with Claim 18, wherein said insulator (1) is of the passing type and is electrically connected to a transformer terminal.
